Europäisches Patentamt

European Patent Office

Office européen des brevets

(11) Publication number: **0 420 565 A2**

# EUROPEAN PATENT APPLICATION

(21) Application number: 90310452.9

(22) Date of filing: 25.09.90

(51) Int. Cl.5: **C04B 35/00, H05B 31/00**

(30) Priority: 29.09.89 GB 8921988

(43) Date of publication of application:
03.04.91 Bulletin 91/14

(84) Designated Contracting States:
AT BE CH DE DK ES FR GB GR IT LI LU NL SE

(71) Applicant: THORN EMI plc
4 Tenterden Street
London W1A 2AY(GB)

(72) Inventor: Hubbard, Stephen James
5 Coopers Nook
East Goscote, Leicester, LE7 8ZB(GB)

(74) Representative: Fleming, Ian Alexander et al
THORN Lighting Limited, The Quadrangle,
Westmount Centre, Uxbridge Road
Hayes, Middlesex, UB4 0HB(GB)

(54) A method of forming a crystalline metal-oxide body.

(57) The invention relates to a method of forming a crystalline metal oxide body from sinterable material. During conventional manufacture of such bodies, they are subject to much handling as they are shaped and ground prior to the final sintering. With this handling, there is a risk that invisible cracks will be produced on the edges and propagate on sintering.

The invention provides a method of manufacture wherein a presintered body is produced and a partial cut made preventing any cracks produced at the edges of the presintered body from propagating through the body during sintering. The sintered body can then be broken at the cut-region to remove the cracked, and possibly chipped, edges and produce a body of the required shape.

FIG. 2a

FIG. 2b

FIG. 2c

FIG. 2d

## A METHOD OF FORMING A CRYSTALLINE METAL-OXIDE BODY

The present invention relates to a method of forming a crystalline metal oxide body from sinterable material. In particular, though not exclusively, the present invention relates to a method of forming an arc tube for a discharge lamp.

As disclosed in e.g. 'Lamps and Lighting', Third Edition 1983, General Editors Cayless and Marsden, pages 127 to 129, it is known to provide arc tubes made of crystalline metal-oxide material of almost theoretical densities. Oxides which may be produced in translucent or transparent form include alumina, common spinel, magnesia, beryllia, zirconia, thoria and various rare earth oxides.

Polycrystalline alumina tubes may be fabricated by normal ceramic methods. The starting powder is prepared by thoroughly admixing grain growth regulating agents with pure alumina powder; this is then isostatically pressed or extruded to form a rough tubular shape. The formed shape is fired, or presintered, at 1100°C in air to increase its strength. The tube so produced may be ground to the required dimensions with due allowance for shrinkage during the final sintering. This is accomplished in a hydrogen or helium atmosphere, or in a vacuum, at a temperature of approximately 1800°C for several hours.

During the final sintering stage, the particles in the tube become ordered and so the material becomes chemically resistant and very hard. The grain-growth regulating agents enable gases trapped in the material to diffuse away and so the material is translucent because of the essential absence of porosity. The shrinkage can be controlled by the particle size of powder used, the degree to which the tube is pressed to form the green-state article; and the parameters of the firing sintering process used. Hence a dimensionally accurate tube can be produced.

During manufacture, arc tubes are subject to much handling as they are shaped and ground prior to the final sintering. With this handling, there is a risk that invisible cracks will be produced at the edges of the presintered arc tube. During sintering, these cracks propagate longitudinally along the arc tube to relieve stress and so become visible. A cracked arc tube is mechanically and chemically weak and optically deficient and so cannot be used. A further problem arises if it is necessary for the arc tube to be trimmed prior to sintering. Trimming is effected by bringing a cutting tool towards the arc tube and can cause chipping at the ends of the trimmed arc tube.

The present invention provides a method of manufacture which at least alleviates these problems.

According to the present invention there is provided a method of forming a crystalline metal-oxide body comprising the steps of:

producing a presintered body of metal-oxide sinterable material having a region of a defined thickness;

making a partial cut in said region to leave a cut-region;

sintering the presintered body so produced;

and then breaking the sintered body at said cut-region;

the cut-region of said presintered body having a thickness sufficiently great to remain intact in the presintered state and sufficiently small to allow the sintered body to be broken at said cut-region.

The inventor has surprisingly found that the provision of a partial cut prevents any cracks produced at the edges of the presintered body from propagating through the body during sintering without the partial cut itself producing further cracking. It appears that the tensile stress produced in the body during sintering is relieved at the partial cut instead of by propagation of the crack. The sintered body can then be broken at the cut-region to remove the cracked, and possibly chipped, edges and produce a body of the required shape.

While the present invention is directed to a method of forming a crystalline metal-oxide body, it will be appreciated by those skilled in the art that the method is detectable at the microscopic level by known techniques. The appearance of a surface which has been produced by breaking a body after sintering is very different from a surface formed in the presintered body and then sintered. Such appearance can be modified but not totally removed by resintering.

Preferably the cut-region of said presintered body has a thickness in the range of from 10% to 80% of said defined thickness. In experiments conducted with polycrystalline alumina bodies, it was found that presintered bodies produced with a cut-region of thickness in the defined range remained intact during normal handling in the presintered state and produced a sintered body which could be broken at the cut-region.

According to a preferred aspect of the present invention, the body comprising an arc tube closed at at least one end by an end plug, said partial cut is produced in a region of the arc tube wall extending outwardly from the end plug, the arc tube wall not being supported by the end plug at said region of the arc tube wall.

This preferred aspect of the preferred invention provides a method of manufacturing arc tubes for discharge lamps in which the percentage of arc tubes which have to be discarded after the sintering process due to the presence of cracks or excessive chipping can be reduced as compared with known methods of manufacture. As already outlined, the presence of cracks is particularly critical in crystalline metal-oxide bodies formed as arc tubes. The arc tube wall is not supported by the end plug at the region of the arc tube wall in which the partial cut is produced and this feature prevents fracture of the arc tube wall and end plug when the arc tube wall is broken at the partial cut.

Preferably the outward surface of the end plug has a chamfer, reducing the risk of the arc tube wall being supported by the end plug at the region of the arc tube wall in which the partial cut is produced.

The method may be used to produced arc tubes in which:

a) the end plug is in line with the end of the arc tube wall (hereinafter termed 'flush' arc tubes);

b) the end plug protrudes outward from the end of the arc tube wall (hereinafter termed 'underhang' arc tubes);

c) the outer surface of the end plug is inward of the end of the arc tube wall (hereinafter termed 'overhang' arc tubes).

The preferred aspect of the present invention is particularly suited for producing arc tubes in which the end plug protrudes outward from the end of the arc tube wall ('underhang' construction). As compared with 'overhang' arc tubes, 'underhang' arc tubes have the advantage that the size of the electrode assembly is not limited by the inner diameter of the arc tube. Accordingly, sizes of electrode assembly can be standardised for a greater range of 'underhang' arc tube sizes (and hence wattages) than is possible for 'overhang' arc tubes. As compared with 'flush' arc tubes, 'underhang' arc tubes have the advantage that the final position of the end plug with respect to the end of the arc tube is not so critical. In the past, it has been found necessary to trim the ends of the 'flush' arc tube construction after sintering - a time-consuming and difficult process in view of the hardness of the sintered product. The removal of the trimming step required for production of 'flush' arc tubes removes the risk of lubricant and dust contaminating the inside of the arc tube. In a prior art method for manufacturing an 'underhang' arc tube construction, the end plug was simply inserted in the arc tube prior to sintering so that the end plug protruded outward of the end of the arc tube. The problem with this is that the end plug may be knocked and so become misaligned when handled prior to the sintering process. This problem can be alleviated in the preferred aspect of the present invention because the part of the arc tube wall which is broken off after sintering provides additional protection of the end plug prior to the sintering step.

Embodiments of the present invention will now be described, by way of example only, and with reference to the accompanying drawings in which:

Figure 1 shows schematically a method of forming an arc tube in accordance with the present invention;

Figure 2 shows schematically part of the method of Figure 1 in greater detail;

Figures 3 to 5 show modifications to the method shown in Figure 2;

and Figures 6a and 6b show photographs of an end of an arc tube formed by a method according to the present invention;

An aqueous mixture of high purity, sub-micron alumina powder is prepared containing a small amount of magnesia for controlling grain growth and a small proportion of an organic binding agent, such as polyvinyl alcohol. This is introduced, in the form of a fine spray, into a chamber counter to a current of hot air. Under the action of surface tension forces, the spray forms itself into regular droplets which are rapidly dehydrated at the temperature of the chamber. The resulting stable spheroids may readily be separated from any fine material produced by passing the product through an air cyclone. The particles thus produced have diameters of the order of 50-350 microns, depending upon the drying conditions and the initial size of the alumina powder used. Particles produced by this process, termed 'spray drying', are free flowing, dust-free and display a higher bulk density than the starting powder.

The cylindrical tube and end plugs for an arc tube are prepared by respectively isostatically and uniaxially pressing the spray-dried alumina powder to the required shapes. Alternatively, the required shapes may be produced by an extrusion process. Alumina powder of different size is used for the cylindrical tube and for the end plugs such that the cylindrical tube shrinks more during the sintering than the end plugs. This assists in producing a hermetic seal between the cylindrical tube and the end plugs. The formed shapes are then fired at a high temperature in air to remove the binding agent and to increase their strength. At this stage, the shapes are opaque and brittle but can be handled for normal processing.

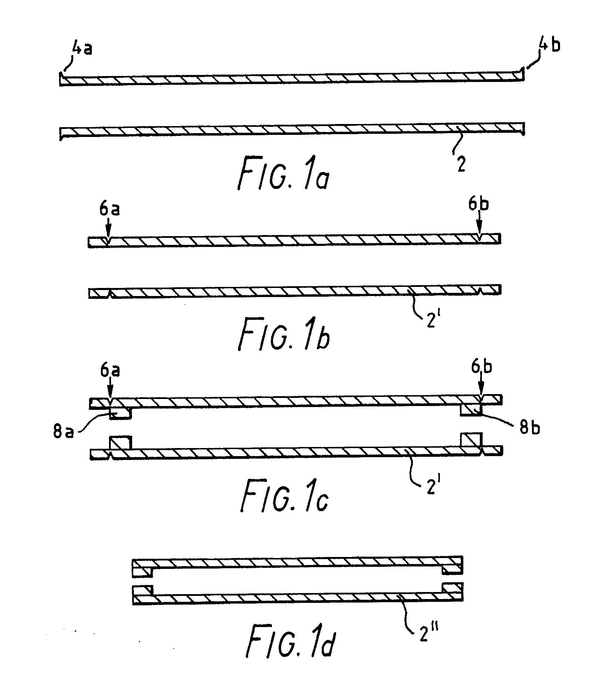

Figures 1a to 1d show schematically the next stages in the method of manufacture. The pre-sintered cylindrical tube 2 is shown in Figure 1a. As shown, the ends 4a, 4b of the cylindrical tube are not well-defined because of a pressing process.

The presintered tube 2 is loaded onto a trimming machine and the ends 4a, 4b are trimmed off to produce a uniformally cylindrical tube 2' of known dimension. (This trimming may not be necessary if the tube has been formed by an extrusion process or if the ends of the cylindrical tube are not deformed by a pressing process.) At the same time, a partial cut 6a, 6b is made at each end of the cylindrical tube 2'. The partial cut 6a, 6b is made in a region of the cylindrical tube 2' of defined thickness such that the thickness of the remaining part of the tube wall is in the range of from 10% to 80% of the defined thickness and so has sufficient strength to be processed normally. For a wall thickness of 1mm, the thickness of the remaining part of the tube wall under the partial cut is 0.2mm.

The presintered tube 2' is then placed on an automatic plug-inserting machine and end plugs 8a, 8b are inserted to the required dimension. In Figure 1c, the end plugs 8a, 8b are positioned with their outward surface in line with the partial cuts 6a, 6b. After sintering, the cylindrical tube is broken at the partial cuts to produce the arc tube 2". This is now ready for electrode assemblies to be inserted at each end.

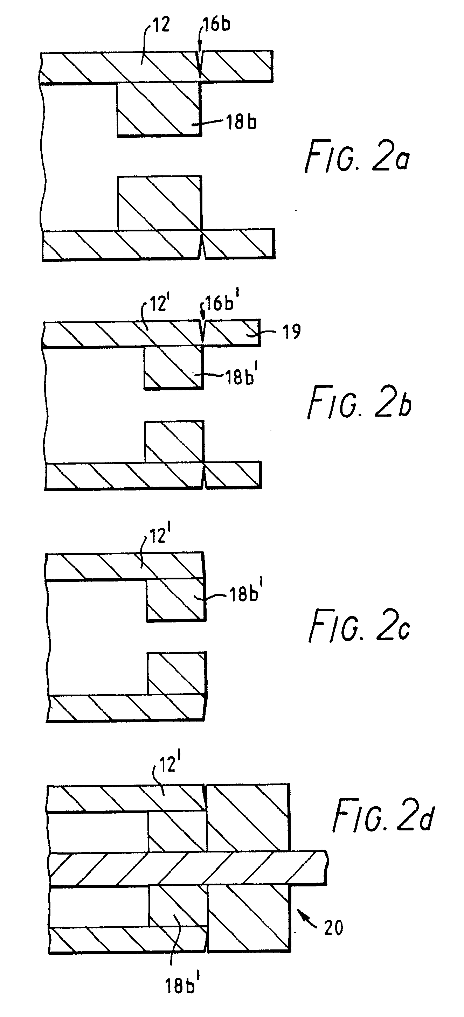

Figures 2 to 5 show the stages in the manufacturing process beyond that of Figure 1c in greater detail.

Figure 2a corresponds to Figure 1c. The presintered tube 12 has a partial cut 16b. A presintered end plug 18b has been placed in position so that its outer surface is in line with the partial cut 16b. In Figure 2b, the tube and end plug construction has been sintered and has shrunk. The ends 19 of the cylindrical tube 12' can then be broken off to produce a construction in which the outer surface of the end plug 18b' is in line with the end of the cylindrical tube 12' as shown in Figure 2c. An electrode assembly 20 is then placed and sealed into position as shown in Figure 2d by conventional techniques.

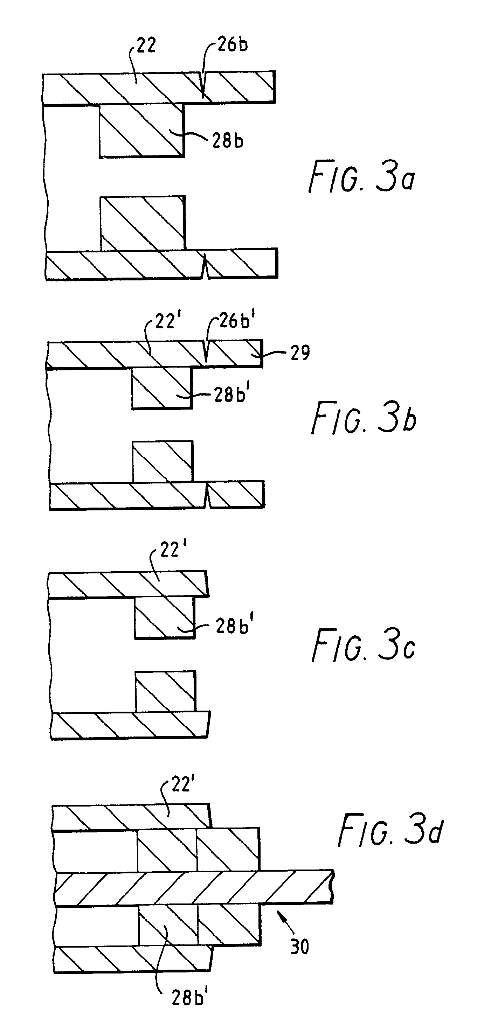

Figure 3 shows a method of manufacturing an 'overhang' arc tube construction according to the present invention. The presintered tube 22 has a partial cut 26b. A presintered end plug 28b has been positioned in the tube 22 so that its outer surface is inward of the partial cut 26b. In Figure 3b, the tube and end plug construction has been sintered and has shrunk. The ends 29 of the cylindrical tube 22' can then be broken off to produce a construction in which the outer surface of the end plug 28b' is inward of the end of the cylindrical tube 22' as shown in Figure 3c. An electrode assembly is then placed and sealed into position by conventional techniques. As can be seen from Figure 3d, the outer diameter of the electrode assembly 30 must be less than the internal diameter of the cylindrical tube 22'.

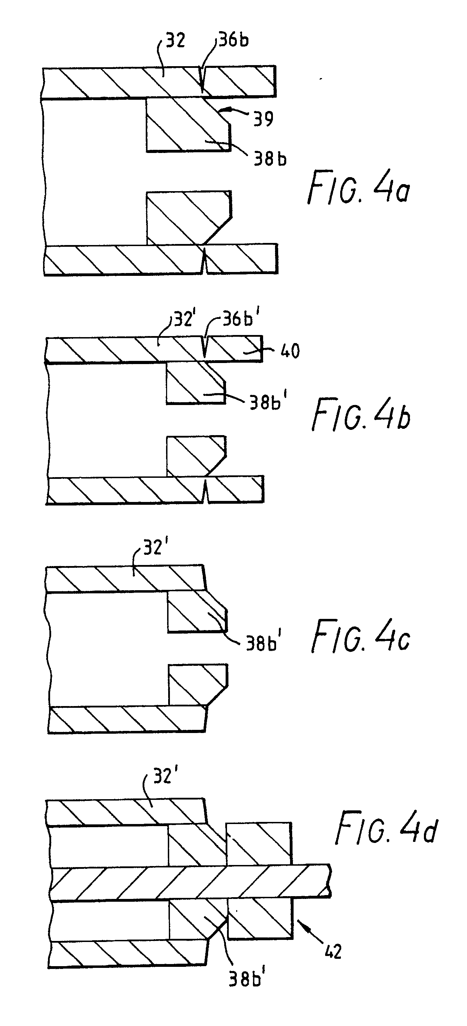

Figure 4 shows a method of manufacturing an 'underhang' arc tube construction according to the present invention. The presintered tube 32 has a partial cut 36b. A presintered end plug 38b has been positioned in the tube 32 so that its outer surface is outward of the partial cut 36b. The end plug 38b has a chamfer 39 so that at the position of the partial cut 36b, the end plug 38b does not support the tube wall. In Figure 4b, the tube and end plug construction has been sintered and has shrunk. The ends 40 of the cylindrical tube 32' can then be broken off to produce a construction in which the outer surface of the end plug 38b' is outward of the end of the cylindrical tube 32' as shown in Figure 4c. An electrode assembly 42 is then placed and sealed into position by conventional techniques. The electrode assembly 42 shown in Figure 4d has an outer diameter equal to that of the internal diameter of the cylindrical tube 32'. It will however be appreciated that the size of the electrode assembly is not limited by the diameter of the cylindrical tube 32', unlike the construction of Figure 3d.

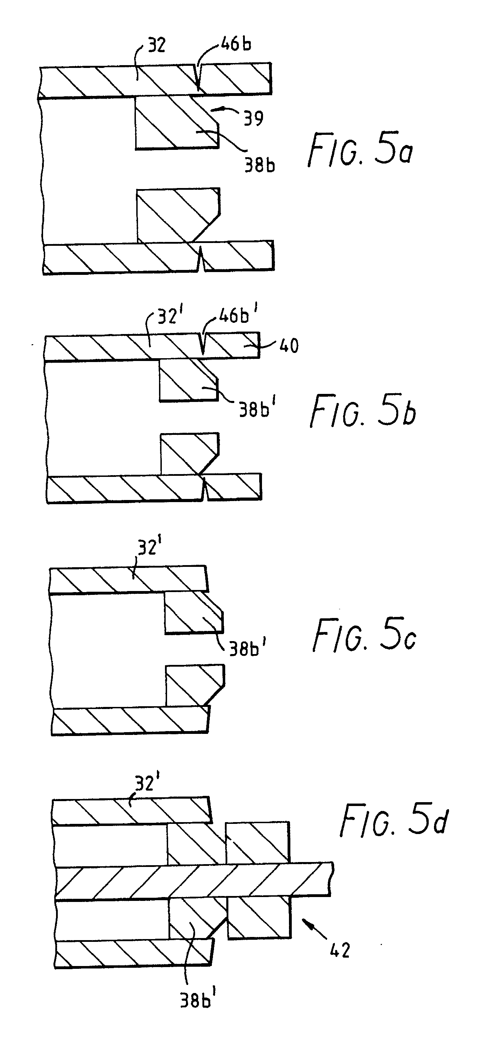

Figure 5 shows a method of manufacturing an 'underhang' arc tube construction similar to the method described with reference to Figure 4. Accordingly, like parts are designated by like reference numerals. As shown in Figure 5a, the end plug 38b is positioned in the tube 32' so that its outer surface is outward of the partial cut 46b while the larger diameter part of the chamfer 39 is inward of the partial cut 46b. The distance between the partial cut 46b and the start of the chamfer 39 in the end plug can be chosen to ensure that the end plug 38b does not support the tube wall irrespective of any longitudinal movement of the end plug in relation to the end of the arc tube. However, such a modification to the method of Figure 4 for this reason has not been found necessary in practice.

Those skilled in the art will appreciate that, in the manufacture of an arc tube for a discharge lamp, it is necessary to provide a hermetic interface between the end plugs and the cylindrical tube. Treatment of the arc tube before or after sintering may be necessary depending on the method of manufacture used.

Various modifications to the methods described will be apparent to those skilled in the art.

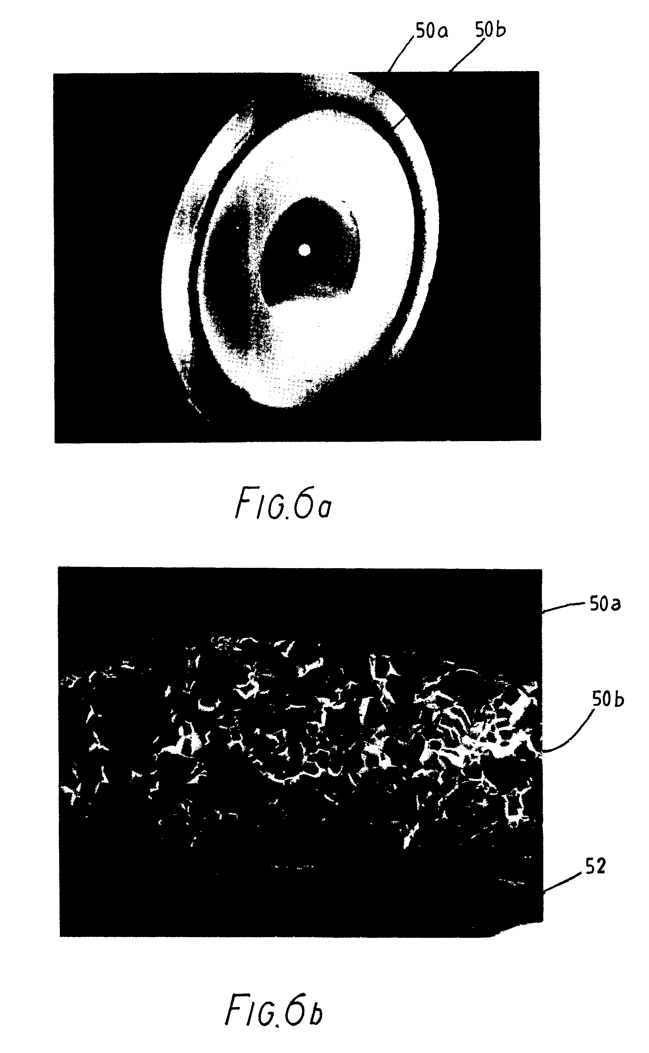

Figure 6a shows a low magnification photograph of an end of an arc tube manufactured by the method of the present invention and showing the sintered cylindrical tube 50 and the end plug 52. Even at a low magnification, the difference in appearance can be seen between the surface 50a of the cylindrical tube which was formed before sintering and the surface 50b which was formed by breaking the cylindrical tube at a cut-region after sintering. Figure 6b shows the difference in appearance seen in a photograph taken at a higher magnification.

## Claims

1. A method of forming a crystalline metal-oxide body comprising the steps of:

producing a presintered body of metal-oxide sinterable material having a region of a defined thickness;

making a partial cut in said region to leave a cut-region;

sintering the presintered body so produced;

and then breaking the sintered body at said cut-region;

the cut-region of said presintered body having a thickness sufficiently great to remain intact in the pre-sintered state and sufficiently small to allow the sintered body to be broken at said cut-region.

2. A method according to Claim 1 wherein the cut-region of said presintered body has a thickness in the range of from 10% to 80% of said defined thickness.

3. A method according to Claims 1 or 2, the body comprising an arc tube closed at at least one end by an end plug wherein said partial cut is produced in a region of the arc tube wall extending outwardly from the end plug, the arc tube wall not being supported by the end plug at said region of the arc tube wall.

4. A method according to Claim 3 wherein the outward surface of the end plug has a chamfer.

FIG. 1a

FIG. 1b

FIG. 1c

FIG. 1d

FIG. 2a

FIG. 2b

FIG. 2c

FIG. 2d

22    26b

*FIG. 3a*

28b

22'    26b'

29

*FIG. 3b*

28b'

22'

*FIG. 3c*

28b'

22'

*FIG. 3d*

30

28b'

FIG. 4a

FIG. 4b

FIG. 4c

FIG. 4d

FIG. 5a

FIG. 5b

FIG. 5c

FIG. 5d

FIG.6a

FIG.6b